Europäisches Patentamt

European Patent Office

Office européen des brevets

(19)

(11) Publication number: **0 183 333**
**A2**

# (12) EUROPEAN PATENT APPLICATION

(21) Application number: **85304440.2**

(22) Date of filing: **21.06.85**

(51) Int. Cl.⁴: **G 01 D 11/30**

(30) Priority: **26.07.84 US 634600**

(43) Date of publication of application:
**04.06.86 Bulletin 86/23**

(84) Designated Contracting States:
**DE FR GB IT**

(71) Applicant: **GENERAL MOTORS CORPORATION
General Motors Building 3044 West Grand Boulevard
Detroit Michigan 48202(US)**

(72) Inventor: **Costello, Scott Michael
6555 Pinehurst
Dearborn Michigan 48126(US)**

(72) Inventor: **Vukovich, William Joseph
5280 Crane
Ypsilanti Michigan 48197(US)**

(74) Representative: **Breakwell, John Neil Bower et al,
GM Patent Section Luton Office (F6) P.O. Box No. 3
Kimpton Road
Luton Beds. LU2 OSY(GB)**

(54) Self-adjusting sensing mechanism.

(57) A sensing mechanism has a retainer ring (20) which is secured in an aperture (40) formed in a housing (12) in which a sensor (18) is to operate. The retainer ring has a plurality of tabs (44) which co-operate with axial and circumferential slots (46, 48) on the sensor to permit removal and replacement of the sensor without the need for adjustment.

On original installation of the sensing mechanism, the retainer ring is positioned in the housing aperture by radially extending tines (36) co-operating with the surface of the aperture. A resilient member (22) permits the mechanism to be installed to a depth deeper than the operating depth, whereupon the resilient member urges the sensor axially, as permitted by a gap (50) between the retainer ring and the circumferential slot, to achieve the proper operating depth.

Fig. 1

EP 0 183 333 A2

0183333

## SELF-ADJUSTING SENSING MECHANISM

This invention relates to a self-adjusting sensing mechanism as specified in the preamble of claim 1.

The invention is concerned with an improved self-adjusting sensing mechanism in which a sensor portion of the mechanism is automatically adjusted (self-adjusted) to a working position at original assembly and is also removable and replaceable to the original position without re-adjustment.

To this end a self-adjusting sensing mechanism in accordance with the present invention is characterised by the features specified in the characterising portion of claim 1.

In the drawing:

Figure 1 is a fragmentary elevational view, partly in section, of a preferred embodiment of a self-adjusting sensing mechanism in accordance with the present invention, in a working environment;

Figure 2 is a top view of a retainer ring of the mechanism shown in Figure 1;

Figure 3 is a sectional view along line 3--3 of Figure 2; and

Figures 4 to 9 show a sensor assembly of the mechanism of Figure 1 in various phases of insertion and removal.

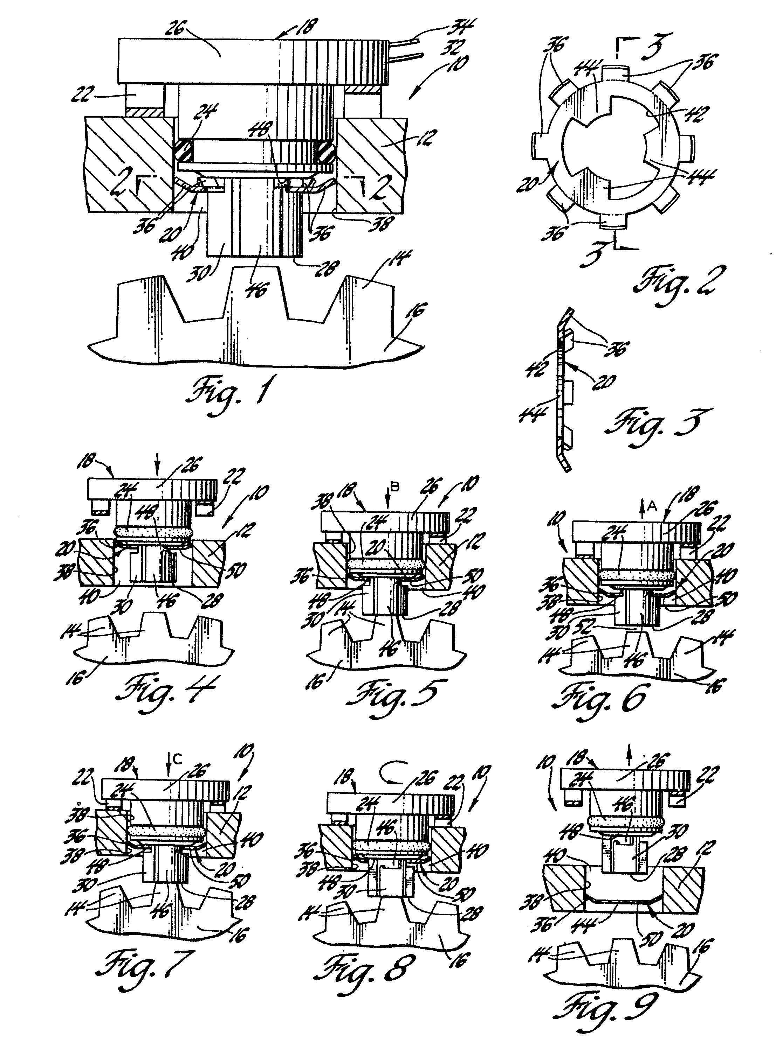

With reference now to the drawing, wherein like reference characters represent the same or corresponding parts throughout the several views, there is shown in Figure 1 a sensing mechanism, generally designated 10, which is disposed in a housing 12 adjacent teeth 14 of a gear wheel 16. The sensing mechanism 10 includes a sensor assembly 18, a retainer ring 20, a wave spring 22 and a resilient O-ring seal 24.

The sensor assembly 18 has a main body portion 26 and a sensor portion 28, disposed in a cylindrical portion 30, extending axially from the main body portion 26. The sensor portion 28 is magnetic in this embodiment, and is operable to cause a difference in electrical signals carried by electrical lines 32 and 34 secured in the main body 26. The sensor portion 28 is responsive to the passage of teeth 14 formed on the gear 16, such that by counting the number of teeth passing the sensor portion 28 in a given time and dividing that value by the number of teeth formed on the gear wheel 16 an accurate measure of revolutions per unit time can be obtained.

The retainer ring 20 has a plurality of radially extending finger-like tines 36 which engage the surface 38 of an aperture 40 formed in the housing 12. The tines 36 will maintain the retainer ring 20 in a fixed position within the aperture in the housing 12 after the original assembly position is attained. The retainer ring 20 also has a central aperture 42 and a plurality of radially inwardly extending tab members 44.

The cylindrical portion 30 has a plurality of axially extending slots 46. One end of each slot 46 terminates in an opening at the bottom of the sensor assembly, and the other end of each slot 46 terminates at a circumferentially extending slot 48. Each slot 46 is of sufficient axial width to permit the sensor assembly 18 to be inserted axially along the tab members 44, and the slot 48 is of an axial thickness greater than the axial width of the retainer ring 20.

Figures 4 to 6 show the sensing mechanism 10 being assembled into the housing 12, and Figures 7 to 9 show the sensor assembly 18 being removed from the housing 12 while the retainer ring 20 remains in the

0183333

aperture 40 of the housing 12 at the assembled location.

In Figure 5, it can be seen that the retainer ring 20 is abutting the upper surface of each slot 48 whilst the sensor portion 28 is in contact with a tooth 14. In this position a gap 50 exists between the lower surface of each slot 48 and the bottom surface of the retainer ring 20, and also the wave spring 22 has been compressed and urges the sensor assembly 18 upwardly in the direction of Arrow A of Figure 6. .

As is shown in Figure 6, the assembly force represented by Arrow B of Figure 5 has been removed so that the wave spring 22 can move the sensor assembly 18 out of contact with the tooth 14. The resulting gap 52 between the tooth 14 and the sensor portion 28 is equal to the gap 50 shown in Figure 5. During operation, the sensor assembly 18 will remain spaced by a distance equal to the gap 52 from the teeth 14 of the gear wheel 16.

Should it become necessary to remove the sensor assembly 18, a force C is applied, as shown in Figure 7, to depress the assembly 18 towards the gear 16 by compressing the spring 22. The assembly 18 is then rotated, as shown in Figure 8, until the axial slots 46 are aligned with the tabs 44 of the retainer ring 20, whereupon the sensor assembly 18 can be withdrawn from the aperture 40, with the retainer ring 20 remaining in the assembled position, as shown in Figure 9.

By reversing the procedure of Figures 7 to 9, the assembly 18 can be re-installed at its original position in the housing 12, without further adjustment.

The sensing mechanism as described is thus self-adjusting at original assembly, that is, the sensor gap is properly set. Also, the sensor portion may be removed and replaced without the need for adjustment during each replacement. Further, the manufacturing tolerances of the slots 48 and the thickness of the retainer ring 20 will allow a used or inoperable sensor to be replaced by a new sensor without the operability of the system being affected, since the gap 52 will not vary significantly from one sensor assembly to another.

Claims:

1. A self-adjusting sensing mechanism for insertion into an aperture (40) in a relatively stationary housing (12), to be held thereby in close proximity to a device (16) to be sensed that is disposed in the housing (12), characterised in that the mechanism (10) comprises a retainer ring (20) of predetermined axial thickness having a central aperture (42) with radially inwardly extending tab means (44) and also having a plurality of tines (36) on the outer periphery thereof for engaging a surface of the aperture (42) during assembly of the mechanism (10), sensor means (18) having a cylindrical axial extension (30) with axially extending slot means (46) thereon alignable with the tab means (44) to permit the sensor means (18) to be inserted into the retainer ring (20), and the sensor means (18) also having a circumferentially extending slot (48) of a predetermined axial width which is greater than the axial thickness of the retainer ring (20) and during assembly of the mechanism (10) is axially alignable with the tab means (44) to thereupon permit rotary movement of the sensor means (18) relative to the retainer ring (20) into a position in which the tab means (44) and the axially extending slot means (46) are circumferentially misaligned, in which position axial movement of the sensor means (18) relative to the retainer ring (20) is limited to an amount not greater than the difference between the said predetermined axial width and the said predetermined axial thickness, and resilient means (22) for urging the sensor means (18) in a direction of removal from the retainer ring (20), with the circumferentially extending slot means (48) and the tab means (44) preventing removal of the sensor means (18) from the aperture (42) in a rotary position of the sensor means (18) in which the tab means (44) and the axially extending slot means (46) are circumferentially misaligned.

2. A self-adjusting sensing mechanism according to claim 1, characterised in that, in the misaligned condition of the tab means (44) and the axially extending slot means (46), axial movement of the sensor means (18) relative to the retainer ring (20) is limited to an amount equal to the difference between the said predetermined axial width and the said predetermined axial thickness.

3. A self-adjusting sensing mechanism according to claim 1 or 2, characterised in that the cylindrical axial extension (30) of the sensor means (18) is constructed to permit insertion of the sensor means (18) into the retainer ring (20) in an axial direction, and the resilient means comprises wave spring means (22) for urging the sensor means (18) axially in a direction of removal from the retainer ring (20).

Fig. 1

Fig. 2

Fig. 3

Fig. 4

Fig. 5

Fig. 6

Fig. 7

Fig. 8

Fig. 9